**Europäisches Patentamt**

**European Patent Office**

**Office européen des brevets**

(19)

(11) Publication number: **0 061 470**
**B1**

(12) # EUROPEAN PATENT SPECIFICATION

(45) Date of publication of patent specification: **27.06.84**

(51) Int. Cl.³: **G 03 B 15/03**

(21) Application number: **81902636.0**

(22) Date of filing: **17.09.81**

(86) International application number:
**PCT/GB81/00193**

(87) International publication number:
**WO 82/01258 15.04.82 Gazette 82/10**

(54) **LIGHT REFLECTOR UNIT FOR A PHOTOGRAPHIC CAMERA.**

(30) Priority: **30.09.80 GB 8031439**
**16.03.81 GB 8108102**

(43) Date of publication of application:
**06.10.82 Bulletin 82/40**

(45) Publication of the grant of the patent:
**27.06.84 Bulletin 84/26**

(84) Designated Contracting States:
**AT CH DE FR GB LI NL SE**

(56) References cited:
**DE - A - 2 833 029**
**US - A - 2 760 048**
**US - A - 3 263 584**
**US - A - 3 821 764**

(73) Proprietor: **LO, Anthony Tak Sau**
**71 Orchard Lea Swanmore**
**Hampshire (GB)**

(72) Inventor: **LO, Anthony Tak Sau**
**71 Orchard Lea Swanmore**
**Hampshire (GB)**

(74) Representative: **Topps, Ronald et al,**
**D. YOUNG & CO 10 Staple Inn**
**London WC1V 7RD (GB)**

Courier Press, Leamington Spa, England.

## Description

This invention relates to a light reflector unit for use with a photographic camera for reflecting light from a light source towards a subject to be photographed. When using a camera with a conventional flash gun mounted on top of the camera to take close-up photographs of a subject there are problems due to parallax and this produces uneven illumination of the subject.

In order to overcome the problems of parallax and to produce an even illumination of the subject a "ring flash" unit is known which consists of an annular flash tube which surrounds the lens unit of the camera. The disadvantages of a "ring-flash" unit are that it requires a power pack which is remote from the flash unit, it is expensive to manufacture and because of the large flash tube it requires a large power pack. Also the "ring-flash" unit can not be used as a constant light source, i.e. one that can be used to illuminate the subject before the photograph is taken in order to enable the photographer to view the illuminated subject before actuating the shutter of the camera.

DE—A—2 833 029 discloses a camera provided with a flash unit and with a plurality of mirrors which are mounted on the camera to deflect the light from the flash unit so that it is deflected towards the object to be photographed along a path close to the axis of the lens unit.

However in this prior art specification the mirrors are not formed as a unit and they have to be adjusted separately.

The light reflector unit according to the present invention is one that has the advantages of a "ring-flash" unit but which does not suffer from the disadvantages of a "ring-flash unit" and which can be used with a conventional flash gun and with a constant light source.

According to the present invention there is provided a light reflector unit for use with a photographic camera for reflecting light from a light source towards the subject to be photographed, in which light reflecting surfaces are used to project light along a path which is close to the lens unit of the camera, characterised in that the reflector unit comprises a hollow casing which can be positioned on a camera between the light source and the lens unit, a window on top of the casing for admitting light from said light source which has its light emitting face facing said window, means within the casing for splitting the admitted light into two or more beams, light reflective surfaces within the casing for deflecting each beam of light to one of a plurality of light emitting outlets located on the casing at a position such that when the casing is positioned on a camera the outlets face in the same direction as the lens unit and are disposed at discrete locations around the lens unit, or said light reflective surfaces deflect the beams to an annular outlet located on the casing such that it faces in the same direction as the lens unit and surrounds the lens unit.

Some embodiments of the present invention will now be described, by way of examples, with reference to the accompanying drawings, in which:

Figure 1 is a diagrammatic front view of a camera provided with a light source and a light reflector unit according to the present invention;

Figure 2 is a side view of the camera and attachments shown in Figure 1;

Figure 3 is a diagrammatic front view of a camera provided with a light source, a light reflector unit according to the present invention, and a light reflector surrounding the lens;

Figure 4 is a side view of the camera and attachments shown in Figure 3;

Figure 5 is an exploded view of the light reflector unit, showing the component parts thereof;

Figure 6 is an exploded view of the light splitting, condensing, reflective and spreading devices of the light reflector unit;

Figure 7 is a diagrammatic perspective view of a camera provided with a light source, a reflector device according to the present invention and hinged deflectors and/or diffusers;

Figure 8 is a diagrammatic perspective view of an embodiment of a light reflector unit according to the present invention provided with a frusto-conical reflector;

Figure 9 illustrates a bracket for providing physical and electrical connection of a flash unit to the hot shoe of a camera;

Figures 10 and 11 show diagrammatically the flash gun and light reflector unit in the two positions on the camera using a reversible bracket;

Figure 12 is a diagrammatic exploded perspective view of the flash gun, light reflector unit and clip member for fastening the light reflector unit to the flash gun;

Figure 13 is a diagrammatic view showing the clip member fastening the light reflector to the flash gun;

Figure 14 shows perspective views of two camera lens which can be used in the outlet windows of the light reflector unit;

Figure 15 is a diagrammatic illustration showing the light paths from the light reflector unit;

Figure 16 shows diagrammatically a side elevation of a camera provided with a light source and a light reflector unit according to the present invention and a multi-lens panel in front of the light reflector unit;

Figure 17 is a perspective view of a suitable multi-lens panel;

Figure 18 is a diagrammatic perspective view showing how the light reflector unit can be carried by a filter holder on a camera, and

Figure 19 shows a light diffuser carried by a filter holder on a camera.

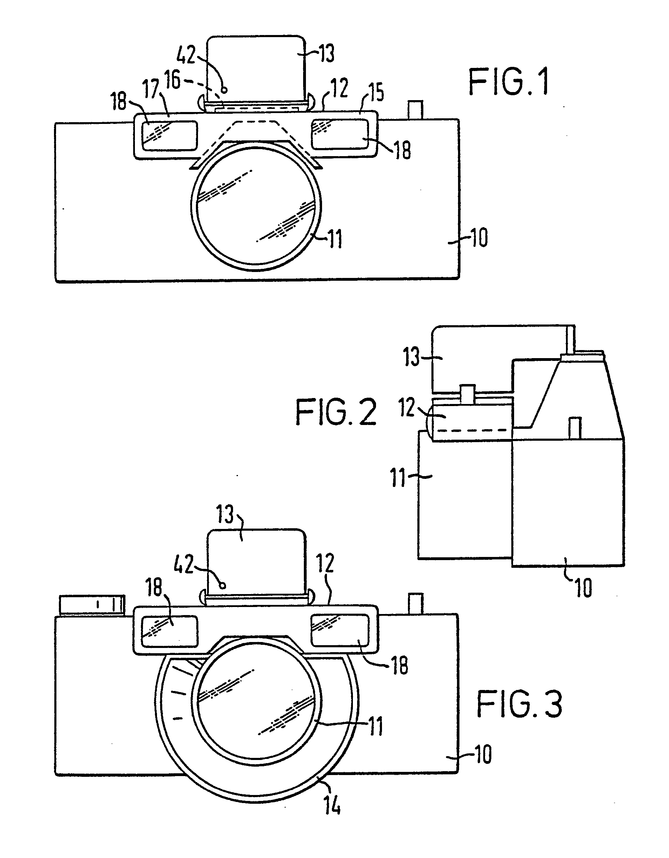

Figures 1 and 2 show a camera 10 provided with a lens unit 11. Located above the lens unit 11 is a light reflector unit 12 according to the present invention. Mounted on top of the light reflector unit 12 is a conventional flash gun 13 which has its light emitting face facing the upper side of the light reflector unit 12. The flash gun 13 can be connected to the accessory shoe of the camera 10 as will be described in greater detail hereafter.

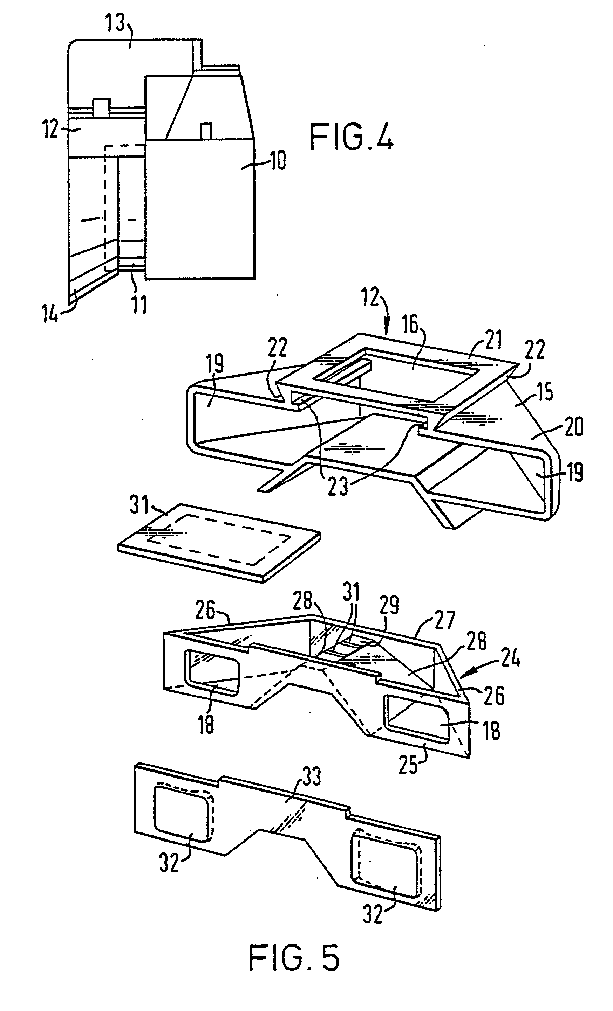

Figures 3 and 4 show a frusto-conical reflector member 14 which partly surrounds the lens unit 11.

The light reflector unit 12 comprises a hollow casing 15 formed of suitable light impervious material such as metal or plastics material. The upper wall of the casing 15 is provided with a window 16 which may be open or closed by a transparent closure. The front wall 17 of the casing 15 is provided with two windows 18.

On the inside of the casing 15 some of the surfaces are provided with light reflective material, such as mirrored material, polished metal material, etc.

A preferred embodiment of the light reflector unit 12 is shown in Figure 5. The casing 15 has end walls 19 which are forwardly inclined. Provided on the upper wall 20 of the casing 15 is a raised portion 21 in which the window 16 is provided, the ends of the raised portion being upwardly and outwardly inclined to form a channel 22. The raised portion 21 is also provided with undercut inwardly facing recesses 23 located in a plane beneath the window 16. The front of the casing 15 is open to receive a unit 24 which comprises a hollow member having a front wall 25 provided with the windows 18, inclined end walls 26 and a rear wall 27. The bottom wall of the unit 24 has two upwardly inclined surfaces 28 which at their upper end terminate in a transverse opening 29 which is divided into a plurality of openings by webs 30. The surfaces of the inclined end walls 26 and the inclined surfaces 28 are covered with a light reflective material. The inclined surfaces 28 and the opening 29 form a light splitter.

The window 16 is covered by a diffuser 31 which engages the recesses 23. Each window 18 is closed by a lens 32 carried on a cover plate 33. The component parts of the unit 12 can be held together in any suitable manner.

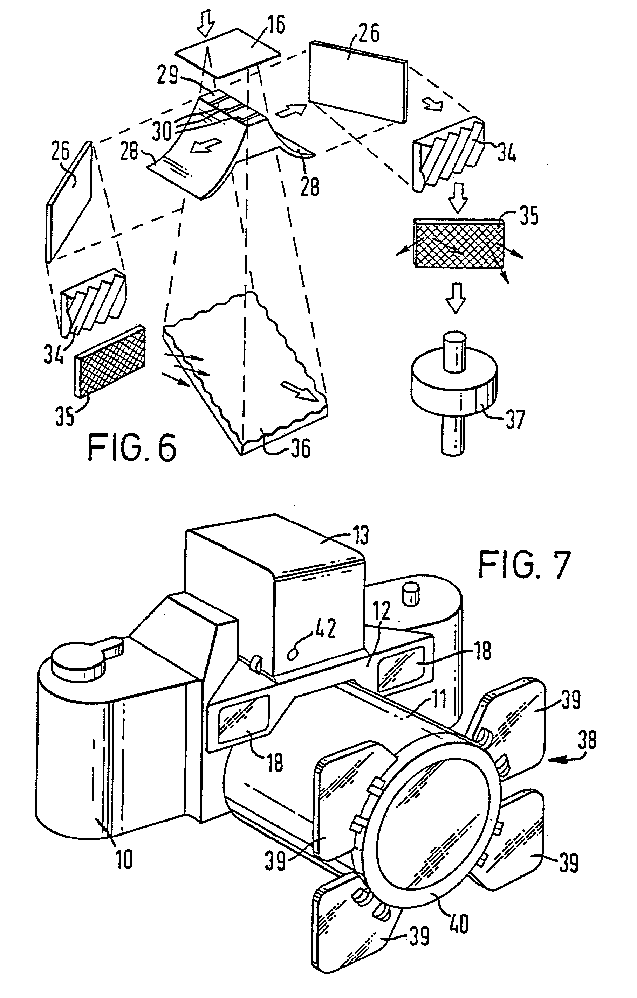

In use, the light emitted from the flash unit 13 passes into the window 16. Some of the admitted light passes straight through the opening 29 and is directed through a window (not shown) provided in the bottom wall of the casing 15 and onto the frusto-conical surface of the reflector member 14 and deflected towards the subject being photographed. The webs 30 serve to confine the light passing through the opening 29 and prevent it spreading. When no reflector 14 is provided, such as in the arrangement shown in Figures 1 and 2, then the opening 29 can be blanked-off and there is no window in the bottom wall of the casing 15. The remainder of the admitted light is split into two paths, one path of light striking the surface of one of the upwardly inclined surfaces 28 and the other striking the surface of the other upwardly inclined surface 28. The inclined surfaces 28 condense the light into beams which are reflected onto the respective interior surfaces of the inclined end walls 26 which deflect the beams of light to the windows 18 where they are diffused and directed to the subject 37 to be photographed. Each of the windows 18 may be provided with a prism or fresnel screen 34 as shown in Figure 6 and with a frosted screen 35. As will be seen from Figure 6, the reflector member 14 can be provided with or replaced by a reflector 36.

The upwardly inclined surfaces 28 may be curved or concave with the concavity directed towards the interior of the unit 24. It will be seen therefore that the light reflector unit 12 splits up the light received from the flash gun 13 into three paths, two of these paths of light being condensed into pencil beams which are directed to optimum positions around the lens unit 11 of the camera 10, and at these positions deflected towards the subject 37 to be illuminated and photographed. On leaving the beam splitter, the light is condensed and the degree of condensation is selected to suit the particular design of light reflector unit 12.

In the embodiment shown in Figure 7 the light reflector unit 12 is either not provided with the opening 29 or the opening 29 is blanked-off and the light received from the flash gun 13 is split and condensed into two beams which are directed to the windows 18. Mounted on the end of the lens unit 11 is a diffuser 38. The diffuser 38 may consist of an annular diffuser or as shown in Figure 7 a plurality of deflectors and/or diffusers 34 hinged to a mounting ring 40. Only two deflectors and/or diffusers 39 will be used at any one time. This arrangement enables any length of lens unit 11 to be fitted to the camera 10 without it obscuring the light directed towards the subject to be photographed. The required exposure can be calculated by measuring the distance between the diffuser 38 and the subject and not the flash to the subject distance via the beam splitter.

The light reflector unit 12 produces an even illumination of the subject 37 at close range, *i.e.* 30 mm or less. Colour filters can be used with the windows 18 of the unit 12 to give special effects. Each beam of light may be controlled with lenses deflectors and/or light absorbing screens to vary the lighting on the subject, *i.e.* to produce shadows on one side. Close-up frames may be used to surround the light reflector unit 12 without any shadows of the frame appearing on the subject.

If the diffuser/deflector 38 shown in Figure 7 is removed the two concentrated light beams from the unit 12 can be used to illuminate a distant subject.

The flash gun 13 can be detached from the unit 12 and can be used in a conventional manner.

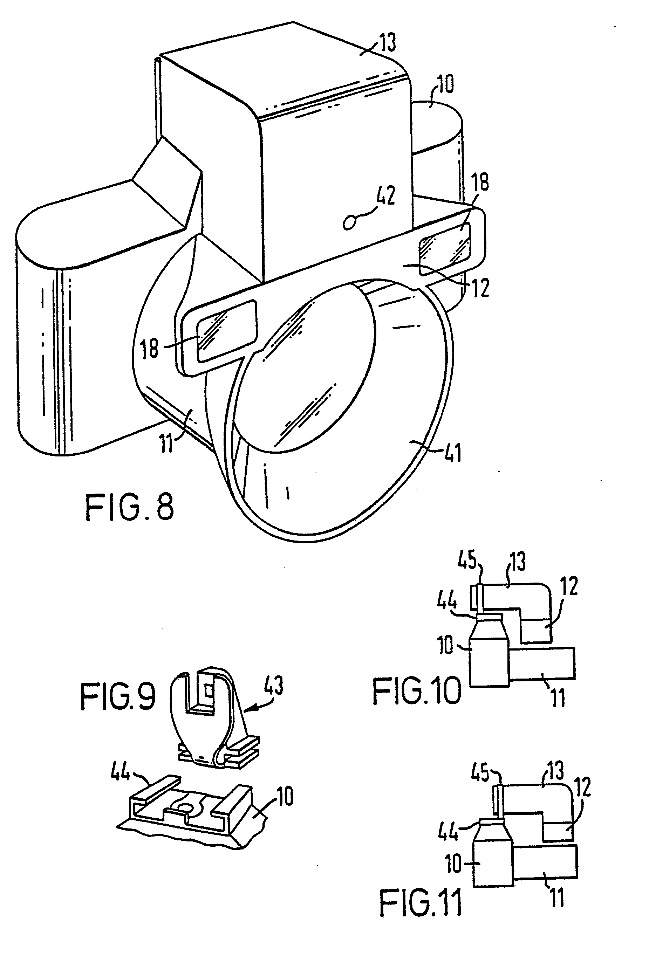

Figure 8 shows a reflector member 41 which is integral with the reflector unit 12. The reflector member 41 will bounce back light reflected from the subject 37 and surroundings to give "fill-in" lighting.

In all the embodiments described the flash gun 13 can be replaced by a constant light source, *i.e.* a tungsten light source. This enables the photographer to see the effect of the lighting on the subject 37 before actuating the shutter of the camera 10. The flash gun 13 can be provided with a light sensor 42.

Figure 9 illustrates a mounting bracket 43 which can be attached to the conventional hot shoe of a camera 10 and used for holding a flash gun 13 on the camera 10.

Figures 10 and 11 illustrate a reversible mounting bracket 43 which can be attached to the conventional hot shoe 44 of a camera 10 and used to hold a conventional flash gun 13 in the desired position on the camera 10, *i.e.* with its light emitting face directed downwardly. The reversible bracket 43 has a mounting flange 45 extending upwardly from one edge. When the bracket 43 is connected to the hot shoe 44 with the flange 45 rearmost the reflector unit 12 which is connected to the flash gun 13 will be close to the body of the camera 10 as shown in Figure 10 and when the bracket 43 is connected to the hot shoe 44 with the flange 45 forwardmost the reflector unit 12 will be located at or near the forward end of the lens unit 11 of the camera 10 as shown in Figure 11.

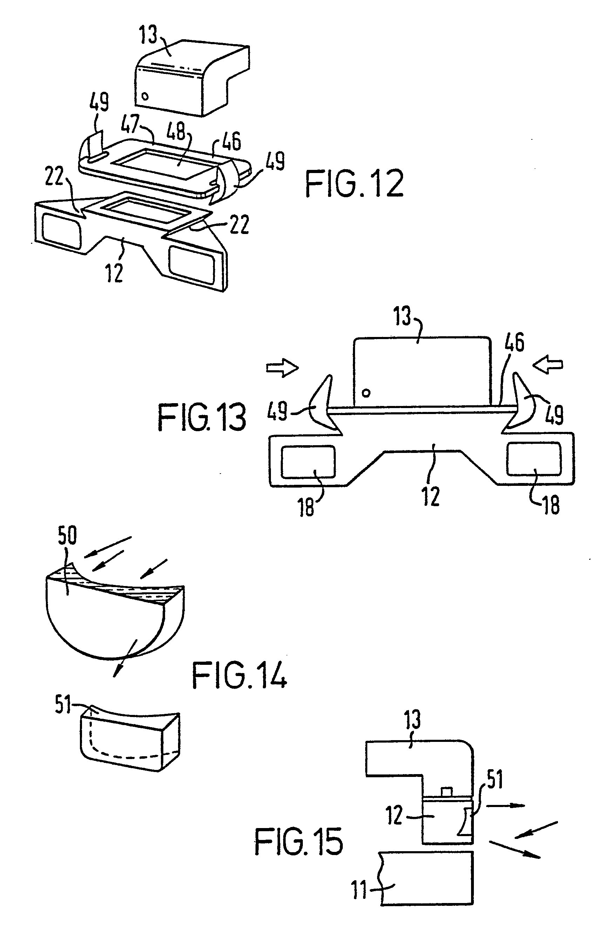

Figures 12 and 13 illustrate a mounting clip 46 which can be fastened to the flash gun 13 by screws or by an adhesive and used for mounting the reflector unit 12 on the flash gun 13. The mounting clip 46 comprises a flat body portion 47 provided with an aperture 48 to allow light to pass through it, and at each side the body portion 47 is provided with a pivotable clamp member 49 which engages with the undercut or dovetail section recess 22 provided on the top of the casing of the reflector unit 12. The two clamp members 49 are caused to pivot by the application of manual force to disengage them from the recesses 22 in order to detach the unit 12 from the flash gun 13. The clamp members 49 can be spring loaded or simply be resilient.

Figure 14 shows two different forms of lens which can be used in the windows 18 of the unit 12. That shown at 50 is symmetrically concave whilst that shown at 51 is assymmetrically concave. The spread of light from lens 50 will be symmetrical whilst that from lens 51 will have a sideways deflection, as shown in Figure 15.

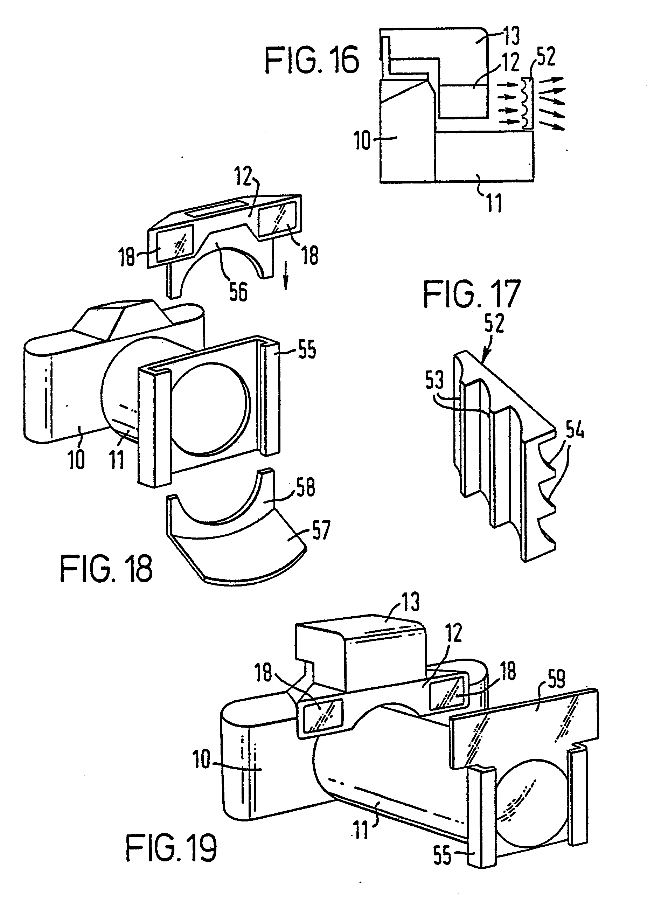

Figure 16 shows the end of the lens unit 11 provided with a multi-lens panel 52. The panel 52 is shown in greater detail in Figure 17, and has arcuate vertical surfaces 53 on one side and arcuate horizontal surfaces 54 on its other side.

Figure 18 shows diagrammatically a filter holder 55 provided on the end of the lens unit 11. The reflector unit 12 is provided with a mounting flange 56 having an arcuate portion which surrounds the lens of the unit 11 and which is received in the holder 55. A reflector 57 which receives light from the unit 12 is provided with a mounting flange 58 which surrounds the lens of the unit 11 and which is received in the holder 55.

In Figure 19 the filter holder 55 carries a diffuser 59 for diffusing the beams of light emitted from the windows 18 of the reflector unit 12.

It will be appreciated that there may be more than two windows 18 provided on the reflector unit 12 and these may be arcuate in front elevation. It is also possible to provide an annular window from which the reflector light is directed towards the subject.

## Claims

1. A light reflector unit for use with a photographic camera for reflecting light from a light source towards the subject to be photographed, in which light reflecting surfaces are used to project light along a path which is close to the lens unit of the camera, characterised in that the reflector unit comprises a hollow casing (15) which can be positioned on a camera (10) between the light source (13) and the lens unit (11), a window (16) on top of the casing (15) for admitting light from said light source (13) which has its light emitting face facing said window (16), means (28) within the casing (15) for splitting the admitted light into two or more beams, light reflective surfaces (26) within the casing (15) for deflecting each beam of light to one of a plurality of light emitting outlets (18) located on the casing (15) at a position such that when the casing (15) is positioned on a camera (10) the outlets (18) face in the same direction as the lens unit (11) and are disposed at discrete locations around the lens unit (11), or said light reflective surfaces (26) deflect the beams to an annular outlet located on the casing (15) such that it faces in the same direction as the lens unit (11) and surrounds the lens unit (11).

2. A light reflector unit as claimed in claim 1, in which the casing (15) is provided with an opening (29) which directs some of the light from a said light source (13) directly across the casing (15) onto a reflector (14, 36) located beneath said casing (15).

3. A light reflector unit as claimed in claim 1 or claim 2, in which the or each outlet (18) is provided with a lens (32) or a diffuser (34, 35).

4. A light reflector unit as claimed in any preceding claim, in which the casing comprises a hollow casing member (15) open at its forward face, and a unit (24) which is received in the casing member (15) and is provided with said means (28) for splitting the admitted light into two or more beams, said light reflective surfaces (26) and said light emitting outlets (18) (Figure 5).

5. A light reflector unit as claimed in claim 4, in which each light emitting outlet (18) is provided with a lens (32) carried on a cover plate (33) (Figure 5).

6. A light reflector unit as claimed in any preceding claim, in which said means (28) for splitting the admitted light comprises two upwardly extending light reflective surfaces inclined towards each other at their upper end.

7. A light reflector unit as claimed in any preceding claim, in which the casing (15) is provided with an attachment (46) for attaching the unit to a light source (13).

8. A light reflector unit as claimed in claim 7, in which the attachment (46) comprises a plate (47) which can be secured to said light source, said plate (47) being provided with pivotable clamp members (49) each of which engage with a recess (22) provided on the upper wall of the casing (15).

9. A light reflector unit as claimed in any preceding claim, provided with, or associated with, a frusto-conical deflector (41) which extends around the lens unit (11).

10. A light reflector unit as claimed in claim 7, in which the attachment comprises a mounting flange (56) provided on the casing (15) and which can be fixed to a filter holder (55) provided on the lens unit (11) of the camera (10).

## Patentansprüche

1. Lichtreflektor für eine fotografische Kamera zum Reflektieren von Licht von einer Lichtquelle zu dem zu fotografierenden Gegenstand, in welchem lichtreflektierende Oberflächen benutzt werden, um Licht längs eines Weges zu projizieren, der sich dicht an der Linseneinheit für die Kamera befindet, dadurch gekennzeichnet, daß der Reflektor ein hohles Gehäuse (15) aufweist, welches auf einer Kamera (10) zwischen der Lichtquelle (13) und der Linseneinheit (11) angeordnet werden kann, ein Fenster (16) oben auf dem Gehäuse (15) für das Einlassen von Licht von der Lichtquelle (13) aufweist, deren lichtemittierende Fläche dem Fenster (16) zugewandt ist, Einrichtungen (28) innerhalb des Gehäuses (15) aufweist zum Aufspalten des eingelassenen Lichtes in zwei oder mehr Strahlen, lichtreflektierende Oberflächen (26) innerhalb des Gehäuses (15) aufweist für das Ablenken jedes Lichtstrahles zu einer einer Mehrzahl von lichtemittierenden Auslässen (18), die auf dem Gehäuse (15) in einer Stellung derart angeordnet sind, daß wenn das Gehäuse (15) auf einer Kamera (10) angeordnet ist, die Auslässe (18) in dieselbe Richtung wie die Linseneinheit (11) gerichtet sind und an diskreten Stellen rund um die Linseneinheit (11) herum angeordnet sind, oder die lichtreflektierenden Oberflächen (26) die Strahlen zu einem ringförmigen Auslaß ablenken, der auf dem Gehäuse (15) derart angeordnet ist, daß er in dieselbe Richtung wie die Linseneinheit (11) gerichtet ist und die Linseneinheit (11) umgibt.

2. Lichtreflektor nach Anspruch 1, bei welchem das Gehäuse (15) mit einer Öffnung (29) versehen ist, welche einen gewissen Teil des Lichtes aus der Lichtquelle (13) direkt durch das Gehäuse (15) auf einen Reflektor (14, 36) richtet, der unter dem Gehäuse (15) angeordnet ist.

3. Lichtreflektor nach Anspruch 1 oder 2, bei welchem der oder jeder Auslaß (18) mit einer Linse (32) oder einem Diffusor (34, 35) versehen ist.

4. Lichtreflektor nach einem der vorherstehenden Ansprüche, bei welchem das Gehäuse ein hohles Gehäuseteil (15) aufweist, welches an seiner Vorderfläche offen ist, und eine Einheit (24) aufweist, die in dem Gehäuseteil (15) aufgenommen und mit der Einrichtung (28) für das Aufspalten des eingelassenen Lichtes in zwei oder mehr Strahlen, den lichtreflektierenden Oberflächen (26) und den lichtemittierenden Auslässen (18) versehen ist (Figur 5).

5. Lichtreflektor nach Anspruch 4, bei welchem jeder lichtemittierende Auslaß (18) mit einer Linse (32) versehen ist, die auf einer Abdeckplatte (33) getragen ist (Figur 5).

6. Lichtreflektor nach einem der vorhergehenden Ansprüche, bei welchem die Einrichtung (28) zum Aufspalten des einfallenden Lichtes zwei sich nach oben erstreckende, lichtreflektierende Oberflächen aufweist, die an ihrem oberen Ende aufeinander zugeneigt sind.

7. Lichtreflektor nach einem der vorhergehenden Ansprüche, bei welchem das Gehäuse (15) mit einer Befestigung (46) zum Befestigen an einer Lichtquelle (13) versehen ist.

8. Lichtreflektor nach Anspruch 7, bei welchem die Befestigung (46) eine Platte (47) aufweist, die an der Lichtquelle befestigt werden kann und mit schwenkbaren Klemmteilen (49) versehen ist, deren jede mit einer Ausnehmung (22) in Eingriff tritt, die an der oberen Wand des Gehäuses (15) vorgesehen ist.

9. Lichtreflektor nach einem der vorhergehenden Ansprüche, der mit einem kegelstumpfförmigen Deflektor bzw. Ablenker (41) versehen oder diesem zugeordnet ist, welcher sich um die Linseneinheit (11) herum erstreckt.

10. Lichtreflektor nach Anspruch 7, bei welchem die Befestigung einen Anbringflansch (56) aufweist, der auf dem Gehäuse (15) vorgesehen ist und an einem auf der Linseneinheit (11) der Kamera (10) vorgesehenen Filterhalter (55) befestigt werden kann.

## Revendications

1. Réflecteur de lumière destiné à servir avec un appareil photographique pour réfléchir la lumière d'une source lumineuse vers le sujet à photographier, dans lequel des surfaces réflectrices de lumière sont utilisées pour projeter de la lumière le long d'un parcours qui est proche de l'objectif de l'appareil photographique, caractérisé par le fait que le réflecteur comprend un boîtier creux (15) qui peut être placé sur un appareil photographique (10) entre la source lumineuse (13) et l'objectif (11), une fenêtre (16) prévue en haut du boîtier (15) pour laisser arriver de la lumière venant de la source lumineuse (13) dont la face émettrice de lumière se trouve en face de la fenêtre (16), des moyens (28) prévus à l'intérieur du boîtier (15) pour diviser la lumière entrante en deux ou davantage de faisceaux, des surfaces réflectrices de lumière (26) prévues à l'intérieur du boîtier (15) pour dévier chaque faisceau de lumière vers l'une de plusieurs sorties d'émission de lumière (18) placées sur le boîtier (15) dans une position telle que lorsque le boîtier (15) est en place sur un appareil photographique (10), les sorties (18) sont tournées dans la même direction que l'objectif (11) et sont disposées en des endroits distincts autour de l'objectif (11), ou que les surfaces réflectrices de lumière (26) dévient les faisceaux vers une sortie annulaire située sur le boîtier (15) de telle sorte qu'elle est tournée dans la même direction que l'objectif (11) et entoure l'objectif (11).

2. Réflecteur de lumière selon la revendication 1, dans lequel le boîtier est muni d'une ouverture (29) qui dirige une partie de la lumière venant de la source lumineuse (13), directement en travers du boîtier (15), sur un réflecteur (14, 36) situé en dessous du boîtier (15).

3. Réflecteur de lumière selon l'une des revendications 1 et 2, dans lequel la sortie de chaque sortie (18) est munie d'une lentille (32) ou d'un diffuseur (34, 35).

4. Réflecteur de lumière selon l'une quelconque des revendications précédentes, dans lequel le boîtier comprend un élément de boîtier creux (15) ouvert à sa face antérieure et une unité (24) qui est logée dans l'élément de boîtier (15) et est munie des moyens mentionnés (28) servant à diviser la lumière entrante en deux ou plusieurs faisceaux, les surfaces réflectrices de lumière (26) et les sorties d'émission de lumière (18) (Figure 5).

5. Réflecteur de lumière selon la revendication 4, dans lequel chaque sortie d'émission de lumière (18) et munie d'une lentille (32) portée par une plaque de recouvrement (33) (Figure 5).

6. Réflecteur de lumière selon l'une quelconque des revendications précédentes, dans lequel les moyens (28) servant à diviser la lumière admise comprennent deux surfaces réflectrices de lumière dirigées vers le haut, inclinées l'une vers l'autre à leur extrémité supérieure.

7. Réflecteur de lumière selon l'une quelconque des revendications précédentes, dans lequel le boîtier (15) est muni d'un accessoire (46) servant à rattacher le réflecteur à une source lumineuse (13).

8. Réflecteur de lumière selon la revendication 7, dans lequel l'accessoire (46) comprend une plaque (47) qui peut être fixée à la source lumineuse, cette plaque (47) étant munie de pinces pivotantes (49) dont chacune s'engage dans un évidement (22) prévu sur la paroi supérieure du boîtier (15).

9. Réflecteur de lumière selon l'une quelconque des revendications précédentes, muni de ou associé à un déflecteur tronconique (41) qui s'étend autour de l'objectif (11).

10. Réflecteur de lumière selon la revendication 7, dans lequel l'accessoire comprend un rebord de montage (56) prévu sur le boîtier (15) et qui peut se fixer à un porte-filtre (55) prévu sur l'objectif (11) de l'appareil photographique (10).

FIG.1

FIG.2

FIG.3

FIG.4

FIG.5

FIG. 6

FIG. 7

FIG. 8

FIG. 9

FIG. 10

FIG. 11

FIG.12

FIG.13

FIG.14

FIG.15

FIG. 16

FIG. 17

FIG. 18

FIG. 19